Europäisches Patentamt

European Patent Office

Office européen des brevets

(11) Veröffentlichungsnummer: **0 356 749**

**A2**

## EUROPÄISCHE PATENTANMELDUNG

(21) Anmeldenummer: **89114402.4**

(22) Anmeldetag: **04.08.89**

(51) Int. Cl.5: **H01R 35/02 , H02G 11/00**

(30) Priorität: **02.09.88 DE 3829915**

(43) Veröffentlichungstag der Anmeldung:
**07.03.90 Patentblatt 90/10**

(84) Benannte Vertragsstaaten:
**CH FR GB LI**

(71) Anmelder: **GIGATHERM AKTIENGESELLSCHAFT**
**Halten 120**
**CH-9035 Grub, AR(CH)**

(72) Erfinder: **Liggenstorfer, Markus**
**Rütistrasse 14**
**CH-9325 Roggwil(CH)**

(74) Vertreter: **Lauer, Joachim, Dr.**
**Hug Interlizenz AG Austrasse 44 Postfach**
**CH-8045 Zürich(CH)**

(54) **Vorrichtung zur sicheren Durchführung insbesondere von Kabeln.**

(57) Es wird eine Vorrichtung zur sicheren Durchführung insbesondere von Kabeln (9) oder dgl. durch Öffnungen in zwei aneinander angelenkten, zwischen einer zueinander etwa parallelen und einer zueinander etwa rechtwinkligen Stellung klappbaren Platten beschrieben. Diese weist ein Rohrstück (14) auf, welches an einem seiner beiden Enden einen flexiblen Abschnitt (15) versehen ist und welches mit diesem Ende im Durchtrittsbereich durch eine der beiden Öffnungen befestigbar ist. Im übrigen ist das Rohrstück im wesentlichen gerade und steif ausgebildet und in einer Muffe (16) verschiebbar geführt, welche im Durchtrittsbereich durch die andere Öffnung um eine zur Anlenkachse der beiden Platten oder dgl. parallele Achse drehbar befestigbar ist. Die erfindungsgemässe Vorrichtung eignet sich insbesondere zur sicheren Führung von Kabeln zwischen dem Gehäuse eines elektrischen oder elektronischen Gerätes und dessen ebenfalls elektrische oder elektronische Funktionselemente enthaltender Tür, wobei bei einer solchen Verwendung die genannten Platten durch zwei bei geschlossener Tür einander benachbarte Wandungsteile von Gehäuse und Tür gebildet werden.

Fig. 4

## Vorrichtung zur sicheren Durchführung insbesondere von Kabeln

### Technisches Gebiet

Die vorliegende Erfindung betrifft eine Vorrichtung zur sicheren Durchführung insbesondere von Kabeln oder dgl. durch Öffnungen in zwei aneinander angelenkten, zwischen einer zueinander etwa parallelen und einer zueinander etwa rechtwinkligen Stellung beweglichen Platten oder dgl., wobei sich die beiden Öffnungen bei paralleler Stellung der Platten zueinander etwa überdecken.

### Darstellung der Erfindung

Es ist Aufgabe der vorliegenden Erfindung, eine Vorrichtung der eingangs genannten Art anzugeben. Diese Aufgabe wird erfindungsgemäss gelöst durch eine Vorrichtung mit den Merkmalen des Patentanspruchs 1.

Die erfindungsgemässe Vorrichtung ist demnach gekennzeichnet durch ein Rohrstück, welches an einem seiner beiden Enden einen flexiblen Abschnitt aufweist und welches mit diesem Ende im Durchtrittsbereich durch eine der beiden Öffnungen befestigbar ist, welches im übrigen im wesentlichen gerade und steif ausgebildet und in einer Muffe verschiebbar geführt ist, welche im Durchtrittsbereich durch die andere Öffnung um eine zur Anlenkachse der beiden Platten oder dgl. parallele Achse drehbar befestigbar ist.

Durch die erfindungsgemässe Vorrichtung werden Kabel (elektrische, optische, pneumatische Leitungen, Schläuche etc.) sicher und ohne die Gefahr einer Beschädigung zwischen den zueinander beweglichen Platten geführt.

Die erfindungsgemässe Vorrichtung eignet sich insbesondere zur sicheren Führung von Kabeln zwischen dem Gehäuse eines elektrischen oder elektronischen Gerätes und dessen ebenfalls elektrische oder elektronische Funktionselemente enthaltender Tür, wobei bei einer solchen Verwendung die genannten Platten durch zwei bei geschlossener Tür einander benachbarte Wandungsteile von Gehäuse und Tür gebildet werden.

Vorteilhafte Ausgestaltungen der Erfindung sind in den abhängigen Ansprüchen gekennzeichnet.

### Kurze Beschreibung der Zeichnungen

Nachfolgend wird die Erfindung anhand eines Ausführungsbeispiels näher erläutert, wobei auf die beigefügten Zeichnungen Bezug genommen wird. Als Ausführungsbeispiel wird speziell eine Kabelführung zwischen der Tür und dem Gehäuse eines Mikrowellenofens beschrieben. In der Zeichnung zeigt:

Fig. 1 in persektivischer Darstellung einen Mikrowellenofen mit geschlossener Garraumtür und darin angeordneten Bedienungselementen,

Fig. 2 den Mikrowellenofen von Fig. 1 mit geöffneter Garraumtür und dadurch sichtbarer Kabelführung zwischen Ofengehäuse und Tür,

Fig. 3 einen Querschnitt durch die Garraumtür und eines Teils des Gehäuses des Mikrowellenofens von Fig. 1 und

Fig. 4 eine Detaildarstellung der Kabelführung zwischen der Garraumtür und dem Ofengehäuse.

In den Figuren sind übereinstimmende Teile mit den gleichen Bezugszeichen versehen.

### Weg zur Ausführung der Erfindung

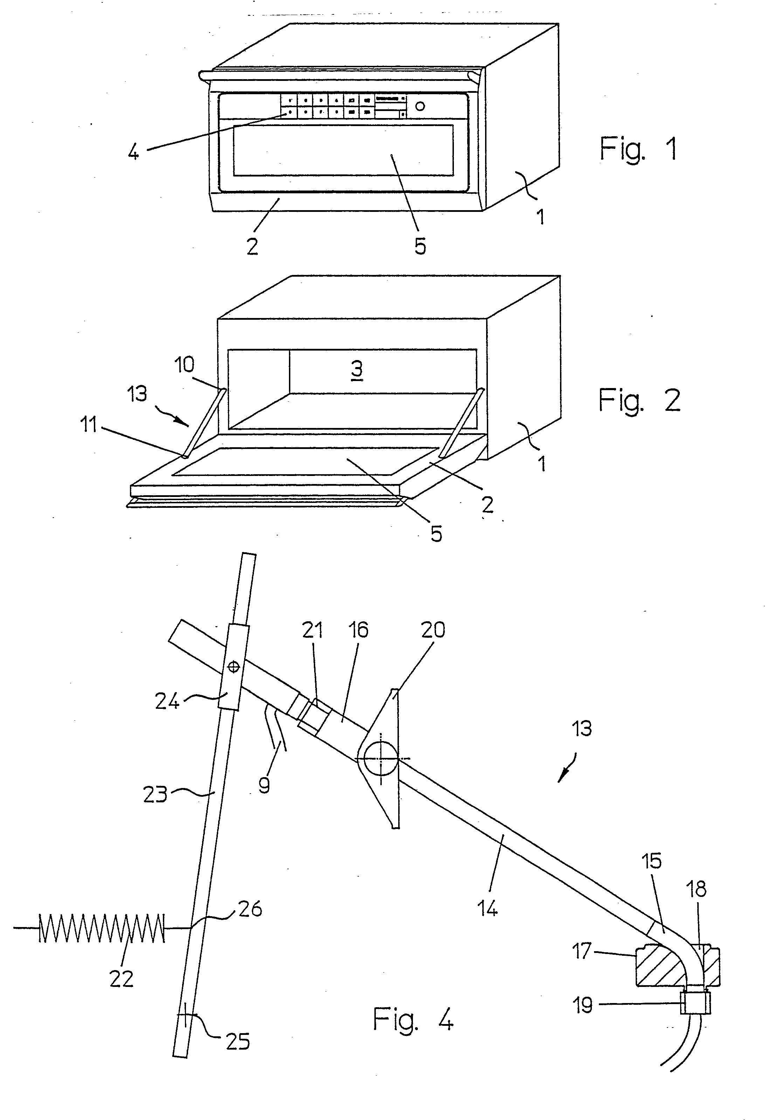

Der in Fig. 1 und 2 dargestellte Mikrowellenofen weist ein Gehäuse 1 auf, an dem frontseitig eine Garraumtür 2 angeschlagen ist. In Fig. 2 ist die Garraumtür 2 geöffnet dargestellt, wodurch der Blick in den Garraum 3 frei ist.

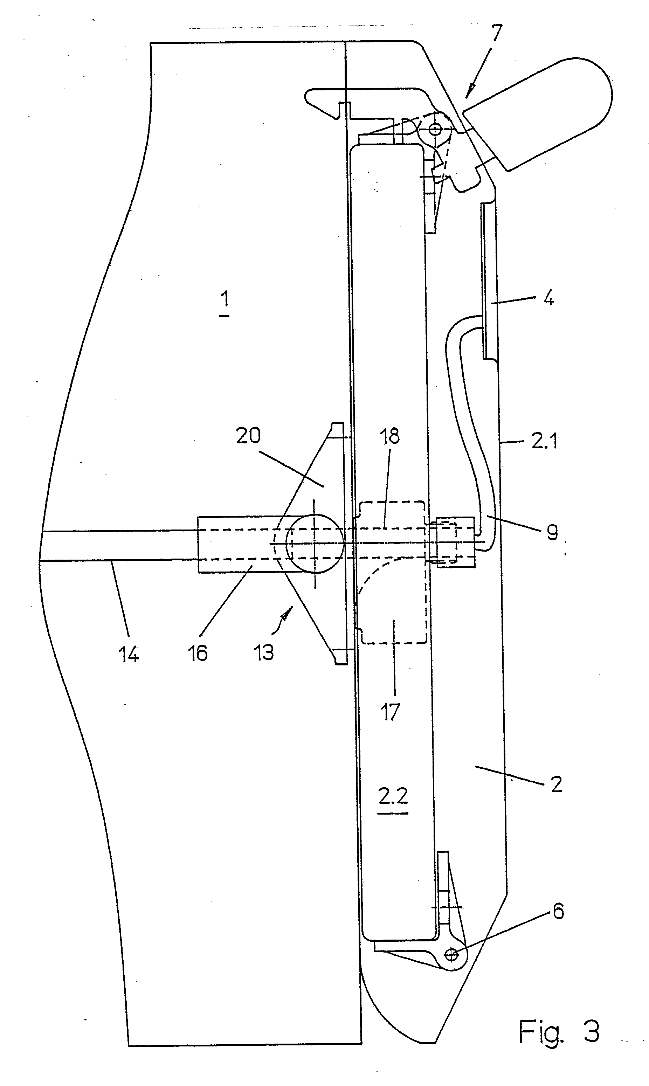

In dem in Fig. 3 dargestellten Querschnitt durch die Garraumtür 2 und einen Teil des Gehäuses 1 des Mikrowellenofens von Fig. 1 bzw. 2 ist mit 6 die Achse, an der die Garraumtür 2 am Gehäuse 1 angeschlagen ist und mit 7 ein Hebel-Mechanismus zur Ver- bzw. Entriegelung der Garraumtür bezeichnet.

Die für die Bedienung des Mikrowellenofens erforderlichen Schalt-, Einstell- und/oder Anzeigemittel 4 sind in die Garraumtür 2 oberhalb des in der Garraumtür vorgesehenen Sichtfensters 5 eingebaut. Sie sind über Kabel 9 mit den übrigen Funktionselementen im Ofengehäuse verbunden.

Wie in Fig. 2 zu erkennen ist, ist die Garraumtür 2 flächenmässig grösser als die Öffnung des Garraums 3 ausgebildet und steht deshalb mit ihren Randzonen über die Garraumöffnung etwas über. In der entspechenden linken seitlichen Randzone sind auf etwa halber Höhe zwei sich bei geschlossener Garraumtür 2 überdeckende Öffnungen 10, 11 in der Garraumtür einerseits und in der Vorderwand des Gehäuses 1 andererseits vorgesehen, durch die die Kabel 9 durchgeführt sind.

Zur sicheren Führung der Kabel 9 zwischen den genannten Öffnungen in der Gehäusewand und der Garraumtür dient eine Kabelführung, welche in den Figuren insgesamt mit 13 bezeichnet ist. Diese weist ein Rohrstück 14 zur Aufnahme der Kabel auf, welches an einem seiner beiden Enden einen flexiblen Abschnitt 15 besitzt und welches mit diesem Ende im Durchtrittsbereich durch die Öffnung 11 in der Garraumtür 2 befestigt ist. Die Länge des flexiblen Abschnitts 15 sollte etwa der Abwicklungslänge des Biegeradius entsprechen. Das Rohrstück 14 ist im übrigen im wesentlichen gerade und steif ausgebildet und in einer Muffe 16 verschiebbar geführt, welche im Durchtrittsbereich durch die Öffnung 10 in der Gehäusewand um eine zur Anschlagachse 6 der Garraumtür 2 am Gehäuse 1 parallele Achse drehbar befestigbar ist.

Zur Befestigung des flexiblen Endabschnitts 15 des Rohrstücks 14 im Durchtrittsbereich durch die Öffnung 11 in der Garraumtür 2 ist ein teilweise in diese Öffnung (hier speziell in den Rahmen des Mirkowellenfilters 2.2) einsetzbares und darin befestigbares Halterungselement 17 mit einer Bohrung 18 zur teilweisen Aufnahme des flexiblen Endabschnitts 15 des Rohrstückes 14 vorgesehen. Die Bohrung 18 ist nach aussen hin, also zum Bereich zwischen der Garraumtür 2 und dem Gehäuse 1 hin, einseitig, vorzugsweise halbrund mit einem etwa dem zwei- bis dreifachen Durchmesser des Rohrstücks entsprechenden Krümmungsradius gekrümmt erweitert, um eine Verbiegung des flexiblen Endabschnittes 15 zuzulassen. In Fig. 4 ist der flexible Endabschnitt 15 des Rohrstücks 14 ganz durch das Halterungselement 17 durchgesteckt und auf der entgegengesetzen Seite mittels einer Klemmverschraubung 19 gegen Herausrutschen gesichert.

Zur drehbaren Lagerung der Muffe 16 ist der mit 20 bezeichnete Lagerbock vorgesehen, welcher, wie in Fig. 3 zu erkennen, im Innern des Gehäuses 1 hinter der Öffnung 10 an dessen Gehäusewand besfestigt ist.

Bei geschlossener Garraumtür 2 ist das Rohrstück 14, wie in Fig. 3 zu erkennen, praktisch vollständig in die Muffe 16 hineingeschoben und ragt durch diese hindurch in das Ofengehäuse hinein (in dem natürlich ein entsprechend freier Raum dafür vorgesehen sein muss). Der flexible Abschnitt 15 des Rohrstücks 14 ist dann gerade und die Achse der Muffe 16 senkrecht zur Gehäusewand ausgerichtet. Beim Öffnen der Garraumtür geleitet das Rohrstück 14 aus der Muffe 16 heraus. Weiter wird der flexible Abschnitt 15 des Rohrstücks 14 zunehmend gebogen und die Muffe 16 in ihrer Winkellage gegenüber der Gehäusewand gedreht. Fig. 4 zeigt die Kabelführung 13 bei etwa rechtwinklig geöffneter Garraumtür.

Die Kabelführung 13 kann mit Vorteil auch derart ausgebildet sein, dass sie gleichzeitig als ein die Garraumtür abfedern des sowie ihren Öffnungswinkel begrenzendes Element dient. Zur Begrenzung des Öffnungswinkel genügt es, Anschlagmittel wie beispielsweise den Sicherungsring 21 auf dem Rohrstück 14 in Fig. 4 vorzusehen, durch welche das Herausgleiten des Rohrstücks 14 aus der Muffe nur bis zu einem gewünschten Grad möglich ist.

Zur Abfederung der Garraumtür wird vorzugsweise am Rohrstück 14 ein von einer Feder 22 beaufschlagter Hebelarm 23 in einer Muffe 24 längsverschiebbar angelenkt, welcher andererseits an einer geeigneten Stelle 25 im Gehäuse angelenkt ist. Die Feder 22 kann eine Druck- oder Zugfeder sein, je nachdem, ob das Öffnen der Garraumtür durch die Federkraft unterstützt (Öffung nach oben) oder erschwert (Öffnung nach unten) werden soll. Durch geeignete Wahl des Angriffspunktes 26 der Feder 22 am Hebelarm 23 kann in einfacher Weise die gewünschte Stärke der Federwirkung eingestellt werden.

Um die im Rohrstück 14 geführten Kabel 9 zusätzlich vor elektromagnetischen Einstreuungen, im vorliegenden Beispiel insbesondere durch die Mikrowellen zu schützen, ist es schliesslich noch von Vorteil, für das Rohrstück 15 ein leitfähiges Material zu wählen oder dieses zumindest mit einer leitfähigen Beschichtung zu versehen. Für seinen flexiblen Abschnitt 15 kann beispielsweise ein Metallgeflecht verwendet werden.

## Ansprüche

1. Vorrichtung zur sicheren Durchführung insbesondere von Kabeln (9) oder dgl. durch Öffnungen (10,11) in zwei aneinander angelenkten, zwischen einer zueinander etwa parallelen und einer zueinander etwa rechtwinkligen Stellung klappbaren Platten oder dgl. (1,2), wobei sich die beiden Öffnungen bei paralleler Stellung der Platten zueinander etwa überdecken, gekennzeichnet durch ein Rohrstück (14), welches an einem seiner beiden Enden einen flexiblen Abschnitt (15) aufweist und welches mit diesem Ende im Durchtrittsbereich durch eine der beiden Öffnungen (11) befestigbar ist, welches im übrigen im wesentlichen gerade und steif ausgebildet und in einer Muffe (16) verschiebbar geführt ist, welche im Durchtrittsbereich durch die andere Öffnung (10) um eine zur Anlenkachse (6) der beiden Platten oder dgl. parallele Achse drehbar befestigbar ist.

2. Vorrichtung nach Anspruch 1, dadurch gekennzeichnet, dass zur Befestigung des flexiblen Endabschnitts des Rohrstücks im Durchtrittsbereich durch die eine Öffnung ein vorzugsweise wenigstens teilweise in diese Öffnung einsetzbares und darin befestigbares Halterungselement (17) mit einer Bohrung (18) zur teilweisen Aufnahme des genannten End abschnitts vorgesehen ist, welche Bohrung zum geraden, steif ausgebildeten Abschnitt des Rohstücks hin einseitig, vorzugsweise halbrund gekrümmt erweitert ist.

3. Vorrichtung nach einem der Ansprüche 1 oder 2, dadurch gekennzeichnet, dass zur drehbaren Befestigung der Muffe im Durchtrittsbereich durch die andere Öffnung ein Lagerbock (20) vorgesehen ist.

4. Vorrichtung nach einem der Ansprüche 1 bis 3, dadurch gekennzeichnet, dass ein die Verschiebbarkeit des Rohrstücks in der Muffe begrenzender Anschlag (21) derart vorgesehen ist, dass die beiden Platten nur bis zu einer bestimmten maximalen Relativwinkelstellung auseinandergeklappt werden können.

5. Vorrichtung nach einem der Ansprüche 1 bis 4, dadurch gekennzeichnet, dass das Rohrstück bezüglich seiner Verschiebbarkeit in der Muffe (16) von einer Feder (22) beaufschlagt ist.

6. Vorrichtung nach Anspruch 5, dadurch gekennzeichnet, dass am Rohrstück ein Hebelarm (23) in einer weiteren Muffe (24) längsverschiebbar angelenkt ist und dass die Feder (22) an diesem Hebelarm angreift.

Fig. 1

Fig. 2

Fig. 4

Fig. 3